# EUROPEAN PATENT APPLICATION

(11) **EP 1 336 764 A1**
(43) Date of publication of application: **20.08.2003**
(21) Application number: 01983827.5
(22) Date of filing: 21.11.2001
(51) Int. Cl.: F16C 11/06

(54) **BALL JOINT**

(30) Priority: 24.11.2000 JP 2000358130
(71) Applicant: KABUSHIKI KAISHA SOMIC ISHIKAWA, Sumida-ku, Tokyo 130-0004 (JP)
(72) Inventor: SUZUKI, Y., K.K. SOMIC ISHIKAWA HAMAMATSU-KOJO, Hamamatsu-shi, Shizuoka 435-8560 (JP); YAMADA, Masahiro, K.K. SOMIC ISHIKAWA HAMAMATSU, Hamamatsu-shi, Shizuoka 435-8560 (JP)
(74) Representative: Kemp, Paul Geoffrey
(86) International application number: JP0110166
(87) International publication number: WO02042652

(57) **Abstract**

A housing (2) of a ball joint (1) includes a socket (13) which is light in weight and formed of an aluminum alloy in a cylindrical shape with a bottom. Together with a bearing seat (4), a ball head portion (31) of a ball stud (3) is contained in an inner chamber (29) of the socket (13). A recess (26) facing the inner chamber (29) is formed in a bottom portion (12) of the socket (13). A ring-shaped wear resistant member (27) made of steel that is harder than the material of the socket (13) is contained in the recess (26). Should the bearing seat (4) be worn and damaged by muddy water that has entered as a result of breakage or damage of a dust cover (5) that covers the opening of the housing (2), the wear resistant member (27), which is made of a harder material, comes into contact with the ball head portion (31) and thereby prevents premature wear of the socket (13).

## Description

### TECHNICAL FIELD

The present invention relates to a ball joint having a socket made of a metal containing aluminum.

### BACKGROUND OF THE INVENTION

Various examples of a ball joint wherein a ball stud is rotatably disposed in a socket of a housing are conventionally used.

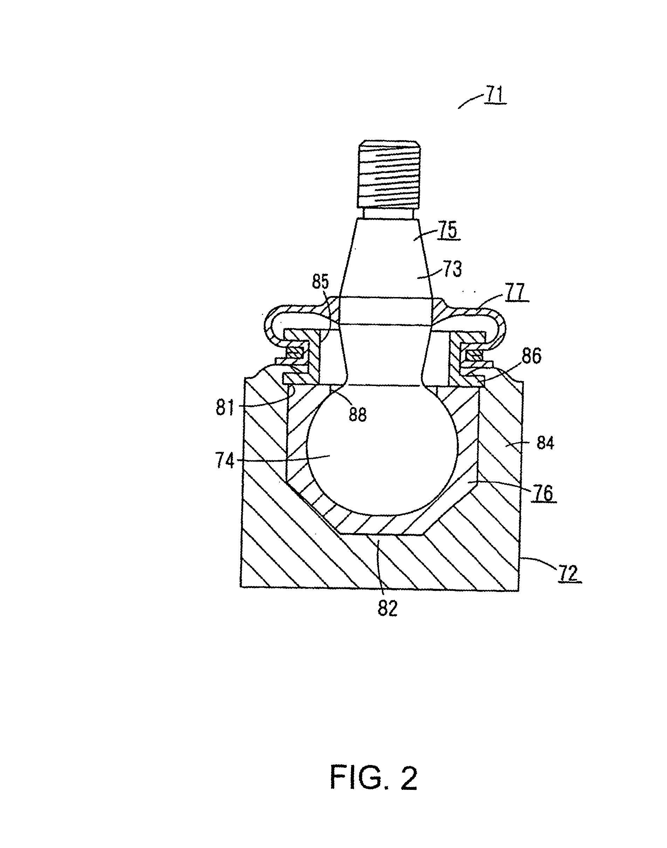

An example of such a ball joint is shown in Fig. 2, wherein a ball joint 71 includes a housing 72 having a generally cylindrical shape with a bottom and open at the top, a ball stud 75, a bearing seat 76, and a dust cover 77. The ball stud 75 has a stud portion 73 and a ball head portion 74, which is formed at an end of the stud portion 73 in such a manner as to have a diameter greater than the stud portion 73. The housing 72 has a socket 84, which is formed of an aluminum alloy as an integral body, and a plug 86. An insertion hole 81 is open at an end of the socket 84, while the other end of the socket 84 is formed into a bottom portion 82. The inner rim of the plug 86 serves as an opening 85 of the housing 72. By placing the plug 86 in the insertion hole 81 of the socket 84 and crimping the rim of the socket 84 inward so as to fix the plug 86 to the socket 84, the housing 72 having a generally cylindrical shape with the opening 85 at an end and a bottom at the other end is formed. The housing 72 contains the aforementioned bearing seat 76, which has a bearing seat hole 88 facing the opening 85. The ball stud 75 is inserted through the opening 85 and the bearing seat hole 88 so that the ball head portion 74 of the ball stud 75 is slidably enveloped in the bearing seat 76. The ball joint 71 includes the aforementioned dust cover 77, which has a tubular shape. With the two ends of the dust cover 77 respectively fitted to the stud portion 73 of the ball stud 75 and the plug 86 of the housing 72, the dust cover 77 covers the housing 72 so as to prevent muddy water or the like from seeping into or otherwise entering the housing 72.

Should the dust cover 77 incur damage due to extended use and cause entry of muddy water or the like into the housing 72, the muddy water or such substances that have entered the gap between the ball stud 75, the bearing seat 76, and the housing 72 makes the bearing seat 76 and the housing 72, each of which is made of a material softer than that of the ball stud 75, prone to wear. When the ball joint 71 continues to be used after the bearing seat 76 has incurred damage, this may cause damage to the housing 72 and consequently impair the function of the ball joint 71. For this reason, the conventional ball joint 71 described above presents a problem in that it requires complicated operation for inspection or replacement of the dust cover 77 or other parts, resulting in increased costs for inspection or replacement of parts.

In order to solve the above problem, an object of the present invention is to provide a ball joint having the capability of preventing premature wear of its housing that is made of a metal containing aluminum.

### DISCLOSURE OF THE INVENTION

A ball joint according to the present invention includes a housing, a bearing seat, a ball stud, and a wear resistant member. The housing includes a socket that has a tubular shape with an inner chamber and a bottom, and is formed of a metal containing aluminum. The bearing seat is disposed in said inner chamber. The ball stud has a ball head portion and a stud portion that extends as a contiguous, integral body with the ball head portion. The ball head portion is disposed in the said inner chamber in such a state that the ball head portion is slidably enveloped in the bearing seat. The wear resistant member is formed of a material harder than that of the housing and disposed in at least a part of the gap between the socket and the bearing seat.

As a result of using a socket formed of a metal containing aluminum, the invention having the feature described above provides a ball joint with a reduced weight. The wear resistant member formed of a material harder than the socket is disposed in at least a part of the gap between the socket, which is made of a metal containing aluminum, and the bearing seat containing the ball head portion of the ball stud in such a way as to permit the ball head portion to slide therein. Therefore, when the bearing seat wears or incurs damage due to entry of muddy water or the like, the wear resistant member prevents direct contact of the socket with the ball head portion and thereby limits the premature wear of the socket. In other words, even if the bearing seat has been damaged, the presence of the wear resistant member prevents premature breakage or damage of the housing, which would otherwise impair the function of the ball joint as an adjustable joint. As a result, operation and costs required for inspection or replacement of parts can be reduced.

According to another feature of the present invention, the socket of the ball joint has a socket opening and a bottom portion, which is located opposite the socket opening and includes a flat inner bottom portion facing towards the socket opening and a slanted surface portion extending contiguously with said inner bottom portion and flaring towards the opening, with the diameter of the slanted surface portion increasing towards the opening; the bearing seat indudes a bottom seat portion and a slanted seat portion, the bottom seat portion facing and in contact with said inner bottom portion, and the slanted seat portion facing and in contact with said slanted surface portion; and the wear resistant member is disposed between the inner bottom portion of the socket and the bottom seat portion of the bearing seat.

With the configuration as above, the wear resistant member is disposed between the inner bottom portion of the housing and the bottom seat portion of the bearing seat, which is particularly prone to premature wear because of its position such that it faces the direction from which load is applied. Therefore, even if the bearing seat wears prematurely and consequently incurs damage, the wear resistant member effectively prevents premature wear of the socket. The load applied to the ball stud from the outside can be absorbed by the slanted seat portion, which is formed as an integral, contiguous body with the bottom seat portion of the bearing seat and is in contact with the slanted surface portion extending contiguously with the inner bottom portion of the socket and flaring towards the opening. As the wear resistant member is thus disposed on the inner bottom portion of the socket, which is less likely to receive load, reduction of the ability of the ball joint to withstand load can be prevented.

According to yet another feature of the present invention, the socket of the ball joint has a recess for securely containing the wear resistant member at the position where the wear resistant member is in contact with the bearing seat.

Therefore, by a simple means such as the recess, the wear resistant member can be immovably positioned regardless of external stress that may be applied thereto as a result of sliding of the ball head portion of the ball stud or for any other reasons. Thus, the invention having the feature described above is capable of preventing premature wear of the bearing seat or the housing, which may otherwise be caused by movement of the wear resistant member.

According to yet another feature of the present invention, the wear resistant member of the ball joint is formed of stainless steel.

The use of stainless steel as the material of the wear resistant member makes the material of the wear resistant member harder than the housing and because of its relative ease in processing easier to produce. Furthermore, as the wear resistant member is free from the problem of corrosion even if muddy water enters the housing, premature wear of the bearing seat or the housing resulting from corrosion of the wear resistant member is prevented.

### BRIEF DESCRIPTION OF THE DRAWINGS

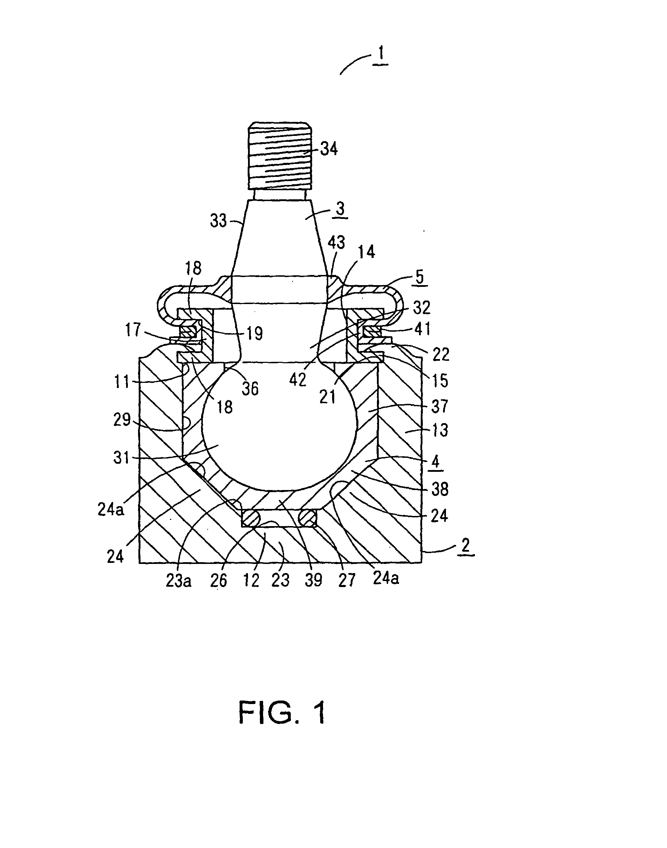

Fig. 1 is a sectional view of a ball joint according to an embodiment of the present invention, and Fig. 2 is a sectional view of a conventional ball joint.

### PREFERRED EMBODIMENT OF THE INVENTION

Next, the configuration of a ball joint representing an embodiment of the present invention is explained hereunder, referring to the relevant drawings.

Referring to Fig. 1, numeral 1 denotes a ball joint comprising a housing 2 which has a generally cylindrical shape with a bottom and made of an aluminum alloy or any other metallic material containing aluminum, a ball stud 3 which may be made of iron or steel, a bearing seat 4 formed of synthetic resin, and a dust cover 5 which is formed of rubber or a soft synthetic resin into a generally cylindrical shape. The ball joint 1 may be used in, for example, the steering system or the suspension system of an automobile.

The housing 2 has a socket 13 forged of an aluminum alloy into a cylindrical, integral shape with a bottom, and a plug 15 which may be made of iron or steel. An insertion hole 11 serving as a socket opening is open at an end of the socket 13, while the other end of the socket 13 is formed into a bottom portion 12. The plug 15 has an opening 14 and may be attached to the insertion hole 11 of the socket 13.

The plug 15 has a cylindrical tubular portion 17, which includes the aforementioned opening 14, and a pair of brim-shaped flange portions 18,18 which extending outward respectively from the two ends of the tubular portion 17. The cylindrical outer surface of the tubular portion 17 between the two flange portions 18,18 forms a recessed stopper portion 19, which is in the shape of a groove extending in the circumferential direction.

A contact portion 21 is formed in the cylindrical inner surface of the socket 13, at a location close to the insertion hole 11, so that that part of the socket 13 is indented like a step. The contact portion 21 has a diameter which is greater than the other part of the inner surface of the socket 13 and nearly the same as the outer diameter of the corresponding flange portion 18 of the plug 15. A crimp portion 22 having a cylindrical shape that is coaxial with the insertion hole 11 of the socket 13 is formed along the rim of the insertion hole 11. The crimp portion 22 is thinner than the remaining part of the socket 13 and adapted to be deformed by being crimped inward so as to fix the corresponding flange portion 18 of the plug 15. The bottom portion 12 of the socket 13 includes an inner bottom portion 23 and a slanted surface portion 24. The inner bottom portion 23 has an inner bottom face 23a, which is a flat surface extending nearly parallel to the opening 14 of the plug 15 adapted to be integrally attached to the insertion hole 11. The slanted surface portion 24 has a slanted surface 24a, which extends contiguously with the inner bottom face 23a of the inner bottom portion 23 and flares towards the opening 14, with the diameter of the slanted surface 24a increasing towards the opening 14.

The socket 13 also includes a recess 26, which is located at the approximate center of the inner bottom portion 23 and open upward, i.e. towards the insertion hole 11.

A wear resistant member 27 formed of a material harder than the socket 13, such as stainless steel, is contained in the recess 26. Although the wear resistant member 27 in this embodiment is formed in a ring-like shape, the shape of the wear resistant member 27 is not limited to a ring-tike shape, and any shape is permissible, including a shape consisting of unlinked rings, a shape resembling a conical spring, a dish, or a sheet. However, such a shape as to be capable of effectively dispersing load that may be applied thereto is preferable. The wear resistant member 27 is contained in the recess 26 in such a manner as to be prevented from extending beyond the inner bottom face 23a of the inner bottom portion 23 into the inner chamber 29, while the upper end of the wear resistant member 27 is nearly flush with the upper end of the inner bottom face 23a.

The plug 15 is inserted into the socket 13 from the insertion hole 11 of the socket 13 until the rim of the lower flange portion 18 of the plug 15 comes into contact with the contact portion 21, and the crimp portion 22 is crimped inward so that the deformed crimp portion 22 secures the flange portion 18 of the plug 15. Thus, the housing 2 having a generally cylindrical shape with the opening 14 at one end and a bottom at the other end is assembled, with the interior of the housing 2 being separated from the outside by the plug 15, and thereby formed into the aforementioned inner chamber 29, which directly communicates with the opening 14. A connector portion having an external thread portion or an internal thread portion (not shown) is provided at the side of the socket 13 of the housing 2 and/or on the underside of the bottom portion 12 of the socket 13.

The ball stud 3 is comprised of a generally spherical ball head portion 31 and a stud portion 33 which is generally in the shape of a solid cylinder and formed as an integral, contiguous body with the ball head portion 31. The diameter of the ball head portion 31 is greater than that of the stud portion 33. The stud portion 33 has a small diameter portion 32, which is contiguous with the ball head portion 31 and at such a location as to extend through the opening 14 of the housing 2 when the ball stud 3 is at the position where it is inserted through the opening 14. An external thread portion 34 is formed at the end of the stud portion 33.

The bearing seat 4 is formed of synthetic resin, such as polyacetal resin, polyurethane resin, or polyamide resin, that has good bearing characteristics and a great ability to withstand load, as well as sufficient rigidity and elasticity. Being principally comprised of a body portion 37, a slanted seat portion 38, and a bottom seat portion 39, the bearing seat 4 is generally formed in a thickset cylindrical shape with a bottom. The inner surface of the bearing seat 4 is formed in a nearly spherical surface corresponding to the surface of the ball head portion 31 so that the ball head portion 31 can be slidably enveloped in the bearing seat 4. The body portion 37 is located at an end of the bearing seat 4 and formed in a cylindrical shape having a bearing seat hole 36 that is formed at an end of the body portion 37 and faces the opening 14. When the ball head portion 31 is in the state that it is inserted into the body portion 37, the ball head portion 31 or the stud portion 33 passes through the bearing seat hole 36 and projects therefrom. The slanted seat portion 38 extends from the other end of the body portion 37, i.e. the end opposite the bearing seat hole 36. The outer surface of the slanted seat portion 38 is in contact with the slanted surface 24a of the slanted surface portion 24 of the housing 2. The bottom seat portion 39 extends from the end of the slanted seat portion 38 as an integral body therewith so as to close off the aforementioned other end of the body portion 37. The outer surface of the bottom seat portion 39 faces the inner bottom portion 23 of the housing 2 and is in contact with the inner bottom portion 23 and the wear resistant member 27. The bearing seat 4 is formed such that the thinnest portion of the bottom seat portion 39 has nearly the same thickness as that of the thinnest portion of the slanted seat portion 38.

The dust cover 5 is formed in a generally cylindrical shape having a first fitting portion 42 at one end and a second fitting portion 43 at the other end. The first fitting portion 42 has a generally annular shape and is adapted to fit to the tubular portion 17 of the plug 15 of the housing 2 and be held in a stopper groove 19 by means of a clip 41 having a ring-like shape. The second fitting portion 43 has a generally annular shape and is adapted to fit to the stud portion 33 of the ball stud 3. The dust cover 5 is attached by attaching the first fitting portion 42 of the dust cover 5 to the plug 15 of the housing 2 and fitting the second fitting portion 43 to the stud portion 33 of the ball stud 3, thereby covering the opening 14. Thus, the ball joint 1 is assembled.

Next, the process of assembling the ball joint of the embodiment described above is explained hereunder.

First, the ball head portion 31 of the ball stud 3 is inserted from the bearing seat hole 36 of the bearing seat 4 into the bearing seat 4 so that the ball head portion 31 is slidably enveloped in the bearing seat 4 in the state where the stud portion 33 projects from the bearing seat hole 36 to the outside of the bearing seat 4. The bearing seat 4, which contains the ball head portion 31 as described above, is then inserted from the insertion hole 11 into the socket 13 in which the wear resistant member 27 is already contained in the recess 26. The bottom seat portion 39 of the bearing seat 4 is brought into contact with the inner bottom portion 23 and the wear resistant member 27 of the socket 13, while the slanted seat portion 38 of the bearing seat 4 is brought into contact with the slanted surface portion 24 of the socket 13. Thereafter, the plug 15 is inserted into the insertion hole 11 of the socket 13, while the bearing seat 4 is pushed against the inner surface of the socket 13. A flange portion 18 of the plug 15 is fixed to the crimp portion 22 by crimping the crimp portion 22 in the state where the flange portion 18 is in contact with the contact portion 21 of the socket 13. Thus, the plug 15 is integrally attached to the socket 13. Thereafter, the first fitting portion 42 of the dust cover 5 is fitted to the tubular portion 17 of the plug 15 of the housing 2 and held in the stopper groove 19 by means of the clip 41, and the second fitting portion 43 is fitted to the stud portion 33 of the ball stud 3. With the dust cover 5 being thus attached to the housing 2 and covering the opening 14, assembly of the ball joint 1 is completed.

Next, the function of the embodiment described above is explained.

The ball joint 1 described above may serve as a part of the suspension system or a steering system of an automobile in the state where a first connectable member and a second connectable member are connected to each other through the ball joint 1, with the connector portion (not shown) of the housing 2 connected to an adaptor portion of the first connectable member, and the external thread portion 34 of the ball stud 3 connected to an adaptor portion of the second connectable member.

The ball stud 3 of the ball joint 1 rocks in conjunction with movement of the adaptor portion connected thereto. The open end of the bearing seat 4, i.e. the end where the bearing seat hole 36 is formed, is pushed against the corresponding flange portion 18 of the plug 16 of the housing 2. Therefore, when the ball stud 3 rocks, the bearing seat 4 is prevented from moving so that the ball head portion 31 smoothly slides on the inner surface of the bearing seat 4. Even if an excessively heavy load is applied to the ball stud 4 in the course of movement of the adaptor portion, the load can be absorbed by the inner surface of the bearing seat 4. Of the entire inner surface of the bearing seat 4, the slanted seat portion 38, which is in contact with the slanted surface portion 24 of the housing 2, particularly contributes to absorbing the load by the wedge effect. As the excessive load is thus absorbed by the bearing seat 4, the wear resistant member 27 disposed on the inner bottom portion 23 of the housing 2 is not likely to have to bear a significant load. In cases where the dust cover 5 is broken or otherwise damaged as a result of causes such as an impact from an external source, it may cause muddy water or such substances to enter from the broken part of the dust cover 5 through the opening 14 of the housing 2 into gaps between the ball stud 3, the bearing seat 4, and the housing 2. Should the ball stud 3 rock in the state where muddy water or the like has entered between the ball stud 3, the bearing seat 4, and the housing 2, friction between the outer surface of the ball head portion 31 of the ball stud 3 and the inner surface of the bearing seat 4 makes the inner surface of the bearing seat 4, which is made of a softer material, prone to wear prematurely. Wear of the bearing seat 4 causes the user, such as the driver of the automobile, to recognize the situation where rattling of the ball stud 3 resulting from the wear of the bearing seat 4 impairs smooth movement of the adaptor portion and replace the ball joint 1.

Should the driver fail to recognize the premature wear of the bearing seat 4, there is the possibility of the muddy water or such substances between the bearing seat 4 and other components causing breakage of the bearing seat 4, exacerbating the rattling. As the body portion 37 of the bearing seat 4 is less prone to receiving an excessive load, premature wear tends to occur at the slanted seat portion 38 or bottom seat portion 39, which are both prone to receiving load. In cases where the bearing seat 4 is broken due to premature wear, the ball head portion 31 of the ball stud 3 directly faces the inner surface of the bottom portion 12 of the housing 2 without interposition of the bearing seat 4. However, as the wear resistant member 27 is disposed at the bottom portion 12, the ball head portion 31 of the ball stud 3 is either in contact with the wear resistant member 27 or faces the wear resistant member 27 with a slight gap therebetween. Should there be muddy water or such substances between the socket 13 of the housing 2 and the ball head portion 31, a part of the bottom portion 12 of the socket 13, which is made of a material softer than that of the ball stud 3, will be unable to avoid premature wear. When the bottom portion 12 wears to some extent, only the wear resistant member 27, which is made of a harder material, is in contact with the ball stud 3. As a result, the wear of the socket 13 is limited so that it takes a longer period of time for the socket 13 to break or become damaged. As the rattling of the ball stud 3 increases dramatically when the wear resistant member 27 is in direct contact with the ball stud 3 due to breakage of the bearing seat 4, the rattling of the ball stud 3 enables the driver to dearly recognize abnormal conditions of the ball stud 3 and perform inspection or repair before the function of the ball stud 3 is impaired.

As the socket 13 is formed of an aluminum alloy according to the embodiment described above, the ball joint 1 can be made lighter in weight than a ball joint having a socket made of iron or steel. Furthermore, inclusion of the wear resistant member 27 limits premature wear of the socket 13.

The embodiment described above calls for providing a wear resistant member 27, which is formed of a material harder than that of the socket 13, between the socket 13. which is made of an aluminum alloy, and the bearing seat 4 contained in the inner chamber 29 of the socket 13 in the state that the ball head portion 31 of the ball stud 3 is enveloped in the bearing seat 4. Therefore, even if the bearing seat 4 wears prematurely due to entry of muddy water or such substances, the wear resistant member 27 between the socket 13 and the ball head portion 31 limits the premature wear of the socket 13 and protects the socket 13 from breakage or damage, which would impair the function of the ball joint 1 as an adjustable joint.

As described above, the inner bottom portion 23 of the bottom portion 12 has a flat surface facing the opening 14 of the housing 2. The bottom seat portion 39 of the bearing seat 4 faces and is in contact with the inner bottom portion 23. As the wear resistant member 27 is disposed between the inner bottom portion 23 and the bottom seat portion 39, the slanted seat portion 38, which is a part of the bearing seat 4 and is in contact with the slanted surface portion 24 of the housing 2, absorbs the excessive load applied to the ball stud 3 from the outside. The wear resistant member 27 is located at the inner bottom portion 23 of the housing 2 and is therefore less likely to have to bear a significant load. With the structure as above, even if the bearing seat 4 wears prematurely, the embodiment is capable of effectively preventing, without reducing the ability of the ball joint 1 to withstand load, premature wear of the socket 13 of the housing 2 by means of the wear resistant member 27 disposed between the inner bottom portion 23 of the housing 2 and the bottom seat portion 39 of the bearing seat 4 which faces the direction from which load is applied and therefore particularly prone to premature wear.

The socket 13 of the housing 2 is provided with a recess 26, which is formed in the surface facing the bearing seat 4 and adapted to securely contain the wear resistant member 27 at the position where the wear resistant member 27 is in contact with the bearing seat 4. In other words, by a simple means such as the recess 26, the embodiment described above is capable of positioning the wear resistant member 27 so as to prevent the wear resistant member 27 from moving when external stress is applied thereto as a result of sliding of the ball head portion 31 of the ball stud 3 or for any other reasons. Thus, the embodiment is capable of preventing premature wear of the bearing seat 4 or the socket 13 of the housing 2, which may otherwise be caused by movement of the wear resistant member 27.

As the wear resistant member 27 is formed of stainless steel, which is harder than the socket 13 of the housing 2 and relatively easy to process, the wear resistant member 27 is free from the problem of corrosion even if muddy water enters the housing 2. The embodiment is thus capable of protect the bearing seat 4 and the socket 13 of the housing 2 from premature wear, which would otherwise be caused by corrosion of the wear resistant member 27.

Although the embodiment explained as above involves a ball joint 1 to be used for the suspension system or the steering system of an automobile, the invention is applicable to any adjustable joint used in various toys, machine tools, or the like.

The aluminum alloy used as the material of the socket 13 may be any light metal containing aluminum, provided that the metal is capable of flowing upon application of pressure and giving the housing 2 of a ball joint 1 desired characteristics, including desired strength, resistance to corrosion, and the ability to permit processing, such as crimping of the crimp portion 22.

Although the wear resistant member 27 is disposed in the recess 26 provided at the inner bottom portion 23 of the housing 2 in the embodiment described above, it may be disposed between the entire inner surface of the housing 2 and the entire outer surface of the bearing seat 4. In yet another configuration, the wear resistant member 27 may be disposed between the slanted seat portion 38 and the slanted surface portion 24, which is prone to receiving load and therefore wearing prematurely wear, or at any other location, provided that the wear resistant member 27 occupies at least a part of the space between the socket 13 and the bearing seat 4.

Although the wear resistant member 27 is securely disposed in the recess 26 in the embodiment described above, the recess 26 may be omitted. If such is the case, the wear resistant member 27 can be positioned in another appropriate manner.

It is not essential for the socket 13 of the housing 2 to have a cylindrical shape with a bottom portion 12 formed as an integral body therewith; for example, the socket portion 13, together with a bottom portion 12 formed as a separate body, may be formed into a tubular shape having a bottom by integrally attaching the bottom portion 12 to the socket 13 in the same manner as fixing the plug 15 to the housing by crimping the crimp portion 22 as described above. The shape of the socket 13 is not limited to a cylindrical shape, and any tubular shape, including those having polygonal cross sections, is also permissible, provided that it has a bottom.

The plug 15 for containing the bearing seat 4 may be formed as an integral body with the socket 13 of the housing 2. For example, the housing 2 may include an opening 14 having a decreasing diameter, an insertion hole located at the end opposite the opening 14, and a bottom portion 12 formed as a separate body to be attached to the housing 2 so as to dose off the insertion hole. A ball joint provided with a housing 2 having this structure may be assembled by inserting, together with the bearing seat 4, the ball head portion 31 of the ball stud 3 through the insertion hole into the housing 2 and subsequently attaching the bottom portion 12 integrally to the housing 2. It is also possible to assemble the ball joint by inserting the ball head portion 31 from the opening 14 into the inner chamber 29 and subsequently crimping the opening 14 of the housing 2 inward so as to narrow the opening 14.

Although the housing 2 of the embodiment described above includes a connector portion to be connected to an adaptor portion, the connector portion may be omitted. If such is the case, the housing 2 may be connected to the adaptor portion by welding or other appropriate means. Furthermore, although the ball stud 3 is provided with the external thread portion 34, the invention is also applicable to other configurations, such as cases where the distal end of the ball stud 3 is formed in a tubular shape, of which cylindrical inner surface has inner threads to be engaged with the adaptor portion, or a ball stud that is adapted to be connected to the adaptor portion by welding or other appropriate means without being provided with the external thread portion 34 or internal threads.

Although the explanation given as above involves a thickset bearing seat 4, any shape that permits the ball head portion 31 to be slidably contained therein is permissible. Although the embodiment described above indudes a dust cover 5, the dust cover 5 may be omitted. However, inclusion of the dust cover 5 is preferable in order to prevent premature wear by preventing entry of muddy water or other foreign substances.

### POSSIBLE INDUSTRIAL APPLICATION

As described above, a ball joint according to the invention may be used, for example, in the suspension system or the steering system of an automobile.

## Claims

1. A ball joint including:
a housing provided with a socket that has a tubular shape with an inner chamber and a bottom, and is formed of a metal containing aluminum,
a bearing seat disposed in said inner chamber,
a ball stud comprising:
a ball head portion disposed in the said inner chamber in such a state as to be slidably enveloped in said bearing seat, and
a stud portion that extends as a contiguous, integral body with the ball head portion, and
a wear resistant member formed of a material harder than that of the housing and
disposed in at least a part of the gap between the socket and the bearing seat.

2. A ball joint as claimed in claim 1, wherein:
the socket includes:
a socket opening and
a bottom portion that is located opposite the socket opening and includes a flat inner
bottom portion facing towards the socket opening and a slanted surface portion extending contiguously with said inner bottom portion and flaring towards the opening, with the diameter of the slanted surface portion increasing towards the opening;
the bearing seat includes:
a bottom seat portion facing and in contact with said inner bottom portion, and
a slanted seat portion facing and in contact with said slanted surface portion; and
the wear resistant member is disposed between the inner bottom portion of the socket
and the bottom seat portion of the bearing seat.

3. A ball joint as claimed in claim 1 or claim 2, wherein the socket has a recess for securely containing the wear resistant member at the position where the wear resistant member is in contact with the bearing seat.

4. A ball joint as claimed in any one of the claims from claim 1 to claim 3, wherein the wear resistant member of the ball joint is formed of stainless steel.
